# EUROPÄISCHE PATENTANMELDUNG

(11) **EP 0 995 920 A2**
(43) Veröffentlichungstag der Anmeldung: **26.04.2000**
(21) Anmeldenummer: 99116498.9
(22) Anmeldetag: 23.08.1999
(51) Int. Cl.: F16D 55/228, F16D 65/092

(54) **Scheibenbremse für ein Kraftfahrzeug**

(30) Priorität: 23.10.1998 DE 19848906
(71) Anmelder: Dr.Ing. h.c.F. Porsche Aktiengesellschaft, 70435 Stuttgart (DE)
(72) Erfinder: AYDT, Günter, 71522 Backnang (DE)

(57) **Zusammenfassung**

Bei einer Scheibenbremse für ein Kraftfahrzeug ist in einem U-förmigen Bremssattel (1) beiderseits einer zwischen dessen beide Schenkel (2,3) eingreifenden Bremsscheibe (17) je ein Bremsbelag (9,10) entgegen der Kraft einer Rückstellfeder und quer zur Ebene der Bremsscheibe (17) verstellbar angeordnet bzw. aufgenommenen. Bei der aktiven Anpressung der Bremsbeläge (9,10) an die Seitenflächen der Bremsscheibe (17) ist eine Anzahl von Radbremszylindern (14,15,16) zugeordnet, welche teils in einem und teils im anderen der einander gegenüberliegenden Schenkel (2,3) des Bremssattels (1) gehalten bzw. untergebracht sind. Die wirksame Länge wenigstens einer der beiden mit der Bremsscheibe (17) zusammenwirkenden Bremsbeläge (9,10) in Umfangsrichtung der Bremsscheibe (17) ist größer als der Abstand zwischen zwei Schwingungsbäuchen (18,19) der Bremsscheibe (17) zumindest bei einer typischen Scheiben-Quietschfrequenz.

## Beschreibung

Die Neuerung bezieht sich auf eine Scheibenbremse nach dem Oberbegriff des Anspruches 1.

Eine derartige Scheibenbremse ist bekannt aus der DE-OS 195 07 102. In dieser Druckschrift ist vorgeschlagen worden die bei herkömmlichen Bauarten von Scheibenbremsen auftretenden, lästigen Geräuschentwicklungen, insbesondere Quietschgeräusche, durch ein bestimmtes ausgewähltes Verhältnis der Länge der Bremsbeläge zu einem gleichfalls ausgewählten, beispielsweise äußeren oder mittleren Umfang der wirkenden Reibfläche der Bremsscheibe abzubauen bzw. in einen akustisch nicht mehr wahrnehmbaren Bereich zu verschieben.

In der Folge hat sich nunmehr jedoch herausgestellt, daß zur Verbesserung des Geräuschverhaltens eine längere Ausbildung der Bremsbeläge wünschenswert sein könnte, was grundsätzlich zwar ohne Weiteres möglich erscheint, in der praktischen Verwirklichung jedoch auf Schwierigkeiten stößt, insbesondere dahingehend, daß eine solche Maßnahme zu einer insgesamt verhältnismäßig groß bauenden Bremse führt.

Der Neuerung liegt die Aufgabe zugrunde eine Scheibenbremse der im Oberbegriff des Anspruches 1 dargestellten Bauart dahingehend weiter zu entwickeln, daß bei zu einer herkömmlichen Scheibenbremse wenigstens vergleichbar kleinbauender Ausbildung des Bremssattels eine optimale Bekämpfung der Scheibenschwingungen im Bereich der typischen Scheiben-Quietschfrequenzen erreicht wird.

Diese Aufgabe wird neuerungsgemäß in der Hauptsache durch die im Anspruch 1 angegebenen Merkmale gelöst.

Die der Neuerung zugrundeliegende Aufgabe kann im Prinzip zwar auch durch den Einsatz zweier hinreichend lang ausgebildeter Bremsbeläge zu beiden Seiten der Bremsscheibe gelöst werden, jedoch erfordert eine solche Lösung eine völlige Veränderung der Brückenkontur, was im weiteren eine kostenaufwendige Änderung des gesamten Schwenklagers zur Folge hätte.

Die Neuerung macht sich in einer vorteilhafteren Verwirklichungsform daher vorzugsweise die Ausnutzung der Tatsache, daß eine wirkungsvolle Bedämpfung der Bremsscheibe auch dann erreichbar ist, wenn lediglich einer der beiden mit der Bremsscheibe zusammenwirkenden Bremsbeläge hinsichtlich seiner wirksamen Länge in Bremsscheibenumfangsrichtung derart verlängert ist, daß er den Abstand zwischen zwei Schwingungsbäuchen der Bremsscheibe wenigstens um einen gewisses Maß überragt. Aus der einseitigen Verlängerung lediglich eines der beiden mit der Bremsscheibe zusammenwirkenden Bremsbeläge ergibt sich zum anderen notwendigerweise eine gewisse Unsymetrie der beiderseits der Bremsscheibe anliegenden Bremsbeläge, woraus zu bei über deren jeweilige Länge hin gleichbleibender Beaufschlagung mit Anpresskraft eine besondere Erhöhung des Geräusch-Verbesserungspotentiales in der Scheibenbremse resultiert.

Im Weiteren führt dann die Beaufschlagung des längeren Bremsbelages durch einen zusätzlichen dritten Radbremszylinder einerseits zu einer gleichmäßigen Beaufschlagung des Bremsbelages über seine gesamte Länge hin und andererseits zu einer Aufteilung der durch die einzelnen Bremszylinder aufzubringenden Anpresskraft, mit der Folge daß eine Verkürzung der Kolbenlänge und damit selbstverständlich auch eine Verringerung der Bauhöhe des entsprechenden Schenkels des Bremssattels.

Die Neuerung ist in der nachfolgenden Beispielsbeschreibung anhand eines in der Zeichnung dargestellten Ausführungsbeispieles im Einzelnen beschrieben.

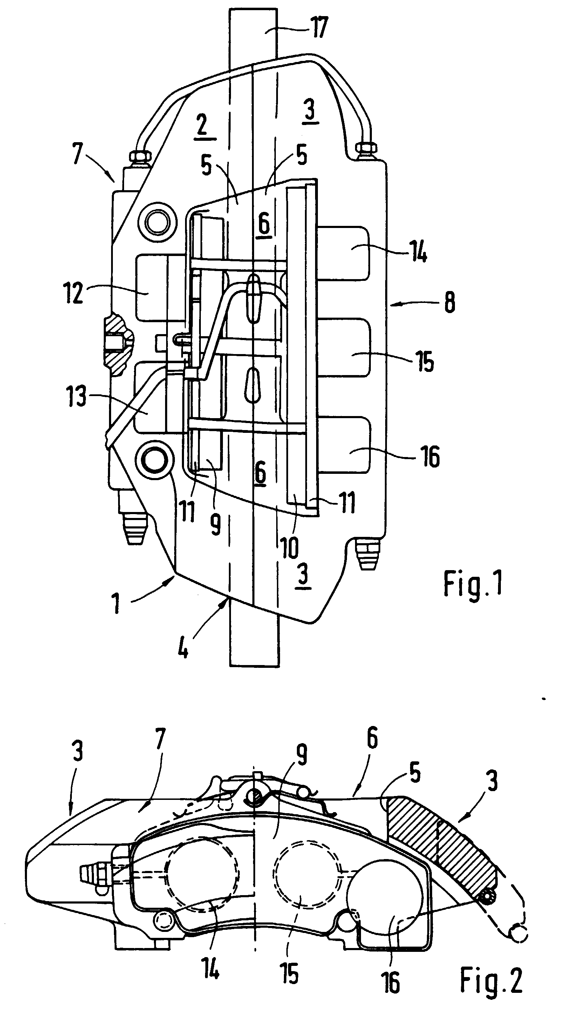

In der Zeichnung zeigt die
- Fig. 1: eine teilweise transparente Draufsicht auf den Bremssattel einer Scheibenbremse,
- Fig. 2: eine Seitenansicht des Bremssattels gemäß Figur 1 und
- Fig. 3: eine schematische Darstellung des Schwingungsverhältnisse in der Bremsscheibe bei einer typischen Quietschfrequenz.

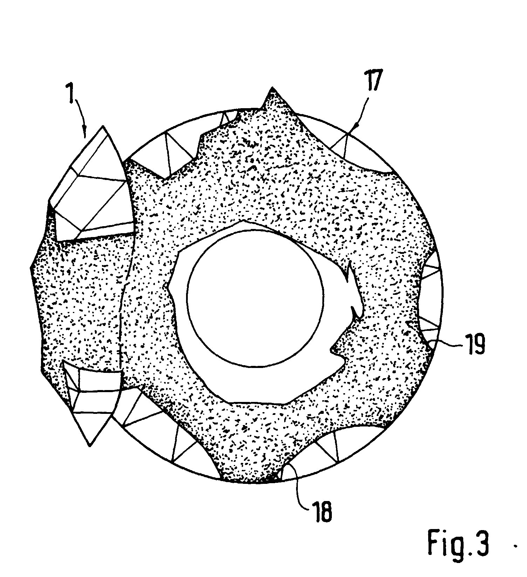

Bei der in der Zeichnung dargestellten Scheibenbremse besteht der Bremssattel 1 aus zwei einander zu einem U-förmigen Bremssattel 1 ergänzenden eine etwa L-förmige Profilform aufweisenden Hälften 2 und 3, welche miteinander durch eine an sich gebräuchliche, in der Zeichnung nicht näher dargestellte Verschraubung miteinander verbunden sind und an ihren das Brückenteil 4 des U-förmigen Bremssattels 1 bildenden kürzeren Profilschenkeln mit Aussparungen 5 versehen sind, welche bei zusammengebautem Bremssattel 1 innerhalb dessen Brückenteil 4 ein Fenster 6 für das Einsetzen und Festlegen der an den Schenkeln 7 und 8 des U-förmigen Bremssattels 1 geführten Bremsbeläge 9 und 10 bilden. Die Bremsbeläge 9 und 10 sind jeweils an Trägern 11 befestigt, welche durch Kolben 12 bis 16 beaufschlagbar sind, um die Bremsbeläge 9 bzw. 10 an der Bremsscheibe 17 zur Anlage und damit in Reibkontakt zu bringen. Bei der gezeigten Ausführungsform ist der mit der bezüglich der Fahrzeugkarosserie innenliegenden Seite der Bremsscheibe 17 zusammenwirkende Bremsbelag 9 in Bremsscheibenumfangsrichtung in der herkömmlichen Weise und in der herkömmlichen Abmessung und damit verhältnismäßig kurz ausgebildet und somit beim Anlegen der Bremse auch in herkömmlicher Weise durch lediglich zwei nebeneinanderliegend angeordnete Bremszylinder bzw. Bremskolben 12 und 13 beaufschlagbar. Der mit der bezüglich der Fahrzeugkarosserie außenliegenden Seite der Bremsscheibe 17 zusammenwirkende Bremsbelag 10 ist, wie dies insbesondere aus der Darstellung der Figur 3 ersichtlich ist, demgegenüber in Bremsscheibenumfangsrichtung länger ausgebildet, derart, daß er in Bremsscheibenumfangsrichtung eine größere wirksame Länge aufweist, als den Abstand zwischen zwei Schwingungsbäuchen 18 und 19 der Bremsscheibe 17 jedenfalls bei der dargestellten, typischen Quietschfrequenz. Im Interesse der Erzielung einer über die gesamte Bremsbelaglänge hin gleichmäßigen Anpresskraft sind dem Bremsbelag 10 insgesamt drei über seine gesamte Länge hin gleichmäßig verteilt angeordnete Bremskolben 14, 15 und 16 zugeordnet. Entsprechend der unterschiedlichen Längen der Bremsbeläge 9 und 10 ist auch das im Brückenteil 3 des Bremssattels 1 vorgesehene Fenster 6 in der Draufsicht trapezförmig gestaltet.

## Patentansprüche

1. Scheibenbremse für ein Kraftfahrzeug, bei welcher in einem U-förmigen Bremssattel beiderseits einer zwischen dessen beide Schenkel eingreifenden Bremsscheibe je ein Bremsbelag entgegen der Kraft einer Rückstellfeder und quer zur Ebene der Bremsscheibe verstellbar angeordnet bzw. aufgenommenen ist und bei der der aktiven Anpressung der Bremsbeläge an die Seitenflächen der Bremsscheibe eine Anzahl von Radbremszylindern zugeordnet ist, welche teils im einen und teils im anderen der einander gegenüberliegenden Schenkel des Bremssattels gehalten bzw. untergebracht sind, dadurch gekennzeichnet, daß die wirksame Länge wenigstens eines der beiden mit der Bremsscheibe (17) zusammenwirkenden Bremsbeläge (9 oder 10) in Umfangsrichtung der Bremsscheibe (17) größer ist als der Abstand zwischen zwei Schwingungsbäuchen (18 und 19) der Bremsscheibe (17) zumindest bei einer typischen Scheiben-Quietschfrequenz.

2. Scheibenbremse nach Anspruch 1, dadurch gekennzeichnet, daß beide mit der Bremsscheibe (17) zusammenwirkenden Bremsbeläge in Umfangsrichtung der Bremsscheibe (17) länger sind als Abstand zwischen zwei Schwingungsbäuchen (18 und 19) der Bremsscheibe (17) bei typischer Scheiben-Quietschfrequenz.

3. Scheibenbremse nach Anspruch 1 und 2, dadurch gekennzeichnet, daß jeder der beiden mit der Bremsscheibe (17) zusammenwirkenden Bremsbeläge (9 und 10) über seine gesamte wirksame Länge hin durch die Radbremszylinder (12 bis 16) gleichmäßig mit Anpresskraft beaufschlagt ist.

4. Scheibenbremse nach Anspruch 1 bis 3, dadurch gekennzeichnet, daß vom innenliegenden (7) zum außenliegenden Schenkel (8) des Bremssattels (1) Bremsbeläge (9 und 10) unterschiedlicher Länge vorhanden und in jedem der beiden Schenkel (7 und 8) des Bremssattels (1) eine entsprechend der unterschiedlichen Länge der Bremsbeläge (9 und 10) unterschiedliche Anzahl von auf den jeweiligen Bremsbelag wirkenden Radbremszylindern (12 bis 16) angeordnet ist.

5. Scheibenbremse nach Anspruch 1 bis 4, dadurch gekennzeichnet, daß der außenliegende Bremsbelag (10) in Umfangsrichtung der Bremsscheibe (17) länger ausgebildet ist als der innenliegende (9).

6. Scheibenbremse nach Anspruch 1 bis 5, dadurch gekennzeichnet, daß dem verlängerten außenliegenden Bremsbelag (10) drei Radbremszylinder (14 bis 16) zur Beaufschlagung mit Anpressdruck und dem innenliegenden kürzer ausgebildeten Bremsbelag (9) zwei Radbremszylinder (12 und 13) zur Beaufschlagung mit Anpressdruck zugeordnet sind.

7. Scheibenbremse nach Anspruch 1 bis 6, dadurch gekennzeichnet, daß der Durchmesser der dem verlängerten außenliegenden Bremsbelag (10) zugeordneten drei Radbremszylinder (12 bis 16) kleiner ist als der Durchmesser der dem innenliegenden, kürzer ausgebildeten Bremsbelag (9) zugeordneten Radbremszylinder (12 und 13).

8. Scheibenbremse nach Anspruch 1 bis 7, dadurch gekennzeichnet, daß die beiden die Bremsbeläge (9 und 10) zumindest führenden Schenkel (7 und 8) des Bremssattels (1) vom innenliegenden (9) zum außenliegenden Schenkel 810) der in Umfangsrichtung der Bremsscheibe unterschiedlich lang ausgebildet sind.

9. Scheibenbremse nach Anspruch 1 bis 8, dadurch gekennzeichnet, daß der länger ausgebildete außenliegend angeordnete Bremsbelag (10) eine geringere Belagstärke aufweist als der innenliegend angeordnete, kürzer ausgebildete Bremsbelag (9) und daß zugleich die dem länger ausgebildeten Bremsbelag zugeordneten Radbremszylinder (14 bis 16) einen geringeren Hub aufweisen als die dem kürzeren Bremsbelag (9) zugeordneten Radbremszylinder (12, 13).

10. Scheibenbremse nach Anspruch 1 bis 9, dadurch gekennzeichnet, daß der innenliegend angeordnete kürzere Bremsbelag (9) bezüglich des außenliegend angeordneten längeren Bremsbelages (10) asymmetrisch angeordnet ist.
